# EUROPEAN PATENT APPLICATION

(11) **EP 1 820 627 A1**
(43) Date of publication of application: **22.08.2007**
(21) Application number: 05806620.0
(22) Date of filing: 18.11.2005
(51) Int. Cl.: B29D 30/16

(54) **APPARATUS AND METHOD OF PRODUCING PNEUMATIC TIRE**

(30) Priority: 19.11.2004 JP 2004336449
(71) Applicant: Bridgestone Corporation, Tokyo 104-8340 (JP)
(72) Inventor: Takasuga, Yutaka, BRIDGESTONE CORPORATION, Technical Center, Kodaira-shi, Tokyo 187-8531 (JP)
(74) Representative: Whalley, Kevin
(86) International application number: PCT/JP2005/021211
(87) International publication number: WO 2006/054680

(57) **Abstract**

A structure of a device for affixing a tire constituting cord on a core having an outer surface shape corresponding to an inner surface shape of a product tire is simplified and time for affixing operation is reduced. A cord affixing device (1) includes a frame (2), a motor (3), manipulators (4A), (4B), and a moving mechanism (5). The manipulators (4A), (4B) are capable of approaching to/ separating from each other in the longitudinal direction of the frame (2) by the motor (3). At the tip ends of the manipulators (4A), (4B), finger chucks (10A), (10B) for holding the cord and pressing members (11A), (11B) for pressing the both ends of the cord (C) onto a bead molding portion are provided. The both ends of the cord (C) cut to a given length are held by the finger chucks (10A), (10B), and the cord (C) is affixed from a tread molding portion of the core (21) to the direction of the bead molding portion along the meridian while a tension is applied in the longitudinal direction.

## Description

### Technical field

The present invention relates to a device and a method for manufacturing a pneumatic tire and particularly to a device and a method for affixing a tire constituting cord cut to a given length on the surface of a rigid core having an outer surface shape corresponding to an inner surface shape of a product tire.

### Background Art

Methods for manufacturing a pneumatic tire include a method comprising a process for forming a cylindrical band by affixing an inner liner, a ply and the like on a flat drum, a process for molding a green case by affixing a side rubber, a stiffener and the like on the band turned up at a bead portion, a process for shaping by supplying air to the green case to expand the diameter from a cylindrical state to a toroidal state, a process for forming a belt/tread laminate in which a belt, a tread and the like are laminated in the annular state, a process for molding a green tire by affixing and integrating the belt/tread laminate to the green case, and a process for vulcanization molding of the green tire, and a method of vulcanizing a green tire together with a rigid core after the green tire is formed by directly affixing tire constituting members such as a carcass ply on the rigid core having an outer surface shape corresponding to an inner surface shape of a product tire.

With the former method, it is difficult to arrange cords in a predetermined direction, since an uneven stress or distortion is applied to the cords in a ply when the diameter of the green case is expanded. On the other hand, with the latter method, by extending the core of a cord in the meridian direction for affixation, the cords can be arranged in a predetermined direction. And Patent Documents 1 and 2 disclose a device and a method for affixing the cords as above.

Patent Document 1 discloses a device where a carcass cord is inserted through an eyelet fixed to a chain equipped on a pulley surrounding a rigid core, the eyelet is reciprocated in the meridian direction on the outer peripheral surface of the core, an arch portion of the carcass cord is sequentially arranged on the core outer peripheral surface on the outward and the inward paths, respectively, and a turned-up portion of the carcass cord is bonded to the core by a pressing device made of a fork member and a hammer.

Patent Document 2 discloses a device using a reciprocating arm instead of the chain of the device described in Patent Document 1.

Patent Document 1: Japanese Patent Application Laid-Open No. 6-155628

Patent Document 2: Japanese Patent Application Laid-Open No. 2001-260245

### Disclosure of the Invention

### Problem to be solved by the Invention

However, since the device disclosed in Patent Documents 1, 2 is configured such that the carcass cord supplied from a reel is affixed by being reciprocated in the meridian direction of the core, a mechanism comprised by a chain and a pulley or a complicated mechanism such as a reciprocating arm are required for supplying the carcass cord from the reel to the eyelet, and there is also a problem that time for affixing operation is long. Also, since an amount of the carcass cord to be supplied is adjusted by a tension adjuster prohibiting reversing of the carcass cord and flexibility of a rod arranged on its downstream side, accurate tension control is difficult.

The present invention was made in order to solve the above problem and has a first object to simplify a structure of a device for affixing a tire constituting cord on a core having an outer surface shape corresponding to an inner surface shape of a product tire, a second object to reduce the time for affixing operation and a third object to facilitate accurate tension control.

### Means for Solving Problem

An invention according to claim 1 is a manufacturing device of a pneumatic tire for affixing a tire constituting cord in the meridian direction of a core outer surface having an outer surface shape corresponding to an inner surface shape of a product tire, and the manufacturing device comprises a cord holding means for holding both ends of the tire constituting cord cut to a given length and applying a tension in the longitudinal direction and a moving means for moving the cord holding means inward in the radial direction and inward in the axial direction of the core in correspondence with the outer surface shape of the core so that the cord applied a tension by the cord holding means is brought into contact with the core outer surface in the meridian direction.

An invention according to claim 2 is a manufacturing device of a pneumatic tire described in claim 1, wherein the moving means moves the both ends of the cord holding means at the same time.

An invention according to claim 3 is a manufacturing device of a pneumatic tire described in claim 1, further comprising means for pressing the both ends of the tire constituting cord onto the core.

An invention according to claim 4 is a manufacturing method of a pneumatic tire, comprising a process for holding both ends of a tire constituting cord cut to a given length, a process for applying a tension to the cord from the held portion in the longitudinal direction, and a process for arranging the tire constituting cord in the tensioned state from a tread molding portion on the core outer surface having an outer surface shape corresponding to an inner surface shape of a product tire to a direction of a bead molding portion along the meridian.

### (Action)

According to the present invention, by holding the both ends of the tire constituting cord cut to a given length and moving the both ends in the state where a tension is applied in the longitudinal direction inward in the tire radial direction and inward in the axial direction on the outer surface of the core having the outer surface shape corresponding to the inner surface shape of a product tire, the cord is arranged from the tread molding portion to the direction of the bead molding direction of the core along the meridian.

### Advantageous Effect of the Invention

According to the present invention, since no mechanism for supplying a tire constituting cord from a reel to the outer peripheral surface of the core is required, configuration of the device is simplified. Also, by affixing the tire constituting cord from a tread molding portion to a direction of a pair of bead molding portions at the same time, time for affixing operation is reduced. Moreover, since the both ends of the tire constituting cord cut to a given length are held, tension control is facilitated.

### Brief Description of the Drawings

Fig. 1 is a plan view of a cord affixing device according to an embodiment of the present invention;
Fig. 2 is a diagram illustrating an operation of the cord affixing device according to the embodiment of the present invention; and
Fig. 3 is a flowchart illustrating a cord affixing procedure of the cord affixing device according to the embodiment of the present invention.

### Description of the Reference Symbols

- 1:: cord affixing device
- 3:: motor
- 4:: manipulator
- 5:: moving mechanism
- 7A, 7B:: air cylinder
- 10A, 10B:: finger chuck
- 11A, 11B:: pressing member
- 21:: core

### Best Modes for Carrying Out the Invention

An embodiment of the present invention will be described below in detail referring to the attached drawings.

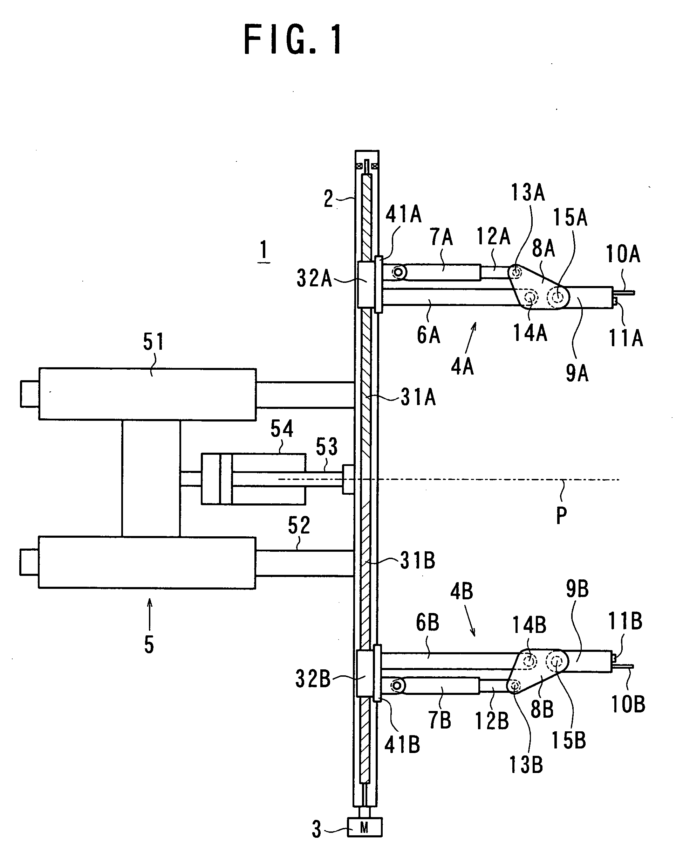

Fig. 1 is a plan view of an affixing device of a tire constituting cord according to an embodiment of the present invention (hereinafter referred to as a cord affixing device). A cord affixing device 1 comprises a frame 2, a motor 3 provided at one end of the frame 2, a pair of manipulators 4A, 4B attached to the frame 2, and a moving mechanism 5 arranged on the side opposite to the manipulators 4A, 4B with respect to the frame 2 and making the frame 2 capable of advance/retreat in a direction crossing the longitudinal direction. The moving mechanism 5 includes a support body 51, a guide member 52, and an air cylinder 54 with one end fixed to the support body 51 and having the tip end of a piston rod 53 traveling back and forth from the other end fixed to the side face of the frame 2, and by moving the piston rod 53 right and left, the frame 2 is advanced/retreated in a direction crossing the longitudinal direction. The moving mechanism may be comprised by a motor and a ball screw.

A ball screw having a left ball screw 31A and a right ball screw 31B having a groove turning in a direction opposite to each other and formed with a center part between them is arranged in the longitudinal direction in the frame 2 capable of forward/reverse rotation by the motor 3, and sliders 32A, 32B having a ball nut inside, respectively, are attached. Since fixed portions 41A, 41B at the base end are fixed to the sliders 32A, 32B, respectively, the manipulators 4A, 4B can be approached to/separated from each other in the longitudinal direction by forward/reverse rotation of the ball screw by the motor 3.

The manipulators 4A, 4B have the same configuration in the opposite orientation and include first arms 6A, 6B, air cylinders 7A, 7B, second arms 8A, 8B, hands 9A, 9B, finger chucks 10A, 10B, and pressing members 11A, 11B advanced/retreated by a piston rod such as an air cylinder, respectively.

The first arms 6A, 6B have one ends attached to the fixed portions 41A, 41B fixed to the sliders 32A, 32B, respectively, and to the other ends, the second arms 8A, 8B are rotatably attached via rotating shafts 14A, 14B. The air cylinders 7A, 7B have one ends attached to the fixed portions 41A, 41B fixed to the sliders 32A, 32B, respectively, and at the tip ends of piston rods 12A, 12B as the other ends, the second arms 8A, 8B are rotatably attached via rotating shafts 13A, 13B. One ends of the hands 9A, 9B are rotatably attached to the second arms 8A, 8B via rotating shafts 15A, 15B, while at the other ends of the hands 9A, 9B, the finger chucks 10A, 10B and the pressing members 11A, 11B are attached.

That is, the first arms 6A, 6B, the air cylinders 7A, 7B, and the second arms 8A, 8B constitute a pair of link mechanisms. And by expanding/contracting the piston rod 12A of the air cylinder 7A, the second arm 8A is rotated clockwise or counterclockwise around the rotating shaft 13A in the figure, and by expanding/contracting the piston rod 12B of the air cylinder 7B, the second arm 8B is rotated clockwise or counter clockwise around the rotating shaft 13A in the figure symmetrically with the second arm 8A with respect to a straight line P passing through the center in the longitudinal direction of the frame 2, and by expanding/contracting the piston rods 12A, 12B in synchronization, an interval between the tip ends of the second arms 8A, 8B (on the side of the rotating shaft 15A, 15B) can be approached to/separated from each other.

The hand 9A incorporates an air cylinder (not shown) for opening/closing the finger chuck 10A and advancing/retreating the pressing member 11A, respectively, and the hand 9B incorporates an air cylinder (not shown) for opening/closing the finger chuck 10B and advancing/retreating the pressing member 11B.

Though not shown, a controller is provided for related operation at a predetermined timing of the motor 3, the moving mechanism 5, the air cylinders 7A, 7B and the air cylinder in the hands 9A, 9B.

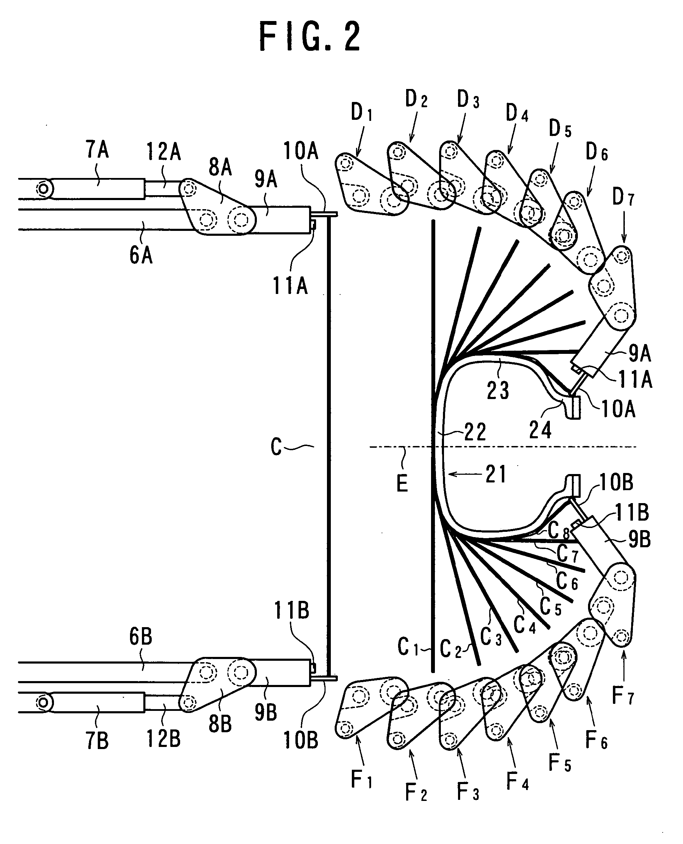

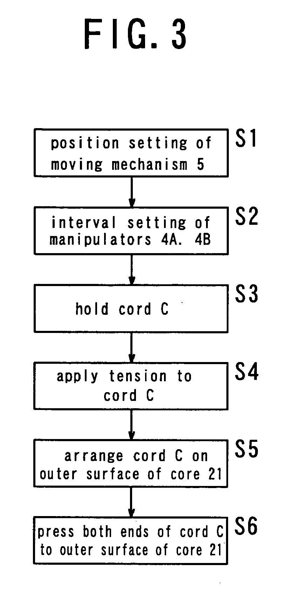

Action of the cord affixing device 1 provided with the above configuration will be described. Fig. 2 is a view illustrating an action by the cord affixing device 1 for affixing a tire constituting cord (hereinafter referred to as a cord) to a core having an outer surface shape corresponding to an inner surface shape of a product tire, and Fig. 3 is a flowchart illustrating the procedure. Fig. 2 shows a section of a core 21, a right portion of the cord affixing device 1 from the frame 2, and a cord C gripped by the finger chucks 10A, 10B of the hands 9A, 9B. The cord C is made by covering a steel cord with rubber and cut to a given length corresponding to the size of the core 21 by a device, not shown, in advance. Also, arrangement is made so that the straight line P passing through the center of the longitudinal direction of the frame 2 of the cord affixing device 1 accords with the equator E of the cord 21.

First, in order to receive the cord C, the position of the moving mechanism 5 is set so as to arrange the cord affixing device 1 at a predetermined position (Step S1), and then, the motor 3 is operated so as to set an interval between the manipulators 4A, 4B to an interval corresponding to the length of the cord C (Step S2). Then, from a supply device of the cord C, not shown, a single cord C cut to a given length is received and held by being gripped by the finger chucks 10A, 10B (Step S3). Next, an air pressure to be supplied to the air cylinders 7A, 7B is adjusted and a predetermined tension is applied to the cord C (Step S4).

Next, while the tension is kept applying on the cord C, the frame 2 is moved so as to come close to the core 21 by the moving device 5, and by gradually narrowing the interval between the manipulators 4A, 4B by the motor 3, the cord C is arranged in the meridian direction from the equator E of the core 21 (Step S5). By this, a trajectory of the hands 8A, 8B as well as the cord C changes as D1 to D7 and F1 to F7 as well as C1 to C8 in Fig. 2, respectively. At this time, the cord C is bonded/held by adhesion of raw rubber covering the surface to the outer peripheral surface of the core 21 in the order of a tread molding portion 22, a side-wall molding portion 23, and a bead molding portion 24. Then, when having reached the positions of D7 and F7 in Fig. 2, the finger chucks 10A, 10B are opened to release the cord C and the pressing members 11A, 11B are advanced at the same time to press the both ends of the cord C onto the bead portion 24 (Step S6).

Affixing of a single cord C has been completed as above. When affixing of a single cord is completed, the cord affixing device 1 is returned to the initial state, the core 21 is rotated by an angle corresponding to an affixing pitch of the cord C, and the routine is repeated from step S1.

As mentioned above, since the cord affixing device 1 according to the present embodiment performs affixing on the both sides of the equator on the outer peripheral surface of the core 21 while the both ends of the cord C cut to a given length are held and a tension is applied to the cord C, a mechanism for supplying the cord C to the outer peripheral surface of the core from a reel is not needed any more and the configuration of the device is simplified. Also, since the both ends of the cord C cut to a given length are held, tension control is facilitated. Moreover, since affixing is made from the center portion to the both ends of the Cord C at the same time, affixing is enabled at a speed higher than affixing by reciprocating action.

It may be so configured that a plurality of cord affixing devices 1 is operated in parallel, thereby shortening the time for affixing the cord C on the entire circumference of the core 21.

## Claims

1. A manufacturing device of a pneumatic tire for affixing a tire constituting cord in the meridian direction of a core outer surface having an outer surface shape corresponding to an inner surface shape of a product tire, the manufacturing device comprising: a cord holding means for holding both ends of the tire constituting cord cut to a given length and applying a tension in the longitudinal direction thereof; and a moving means for moving the cord holding means inward in the radial direction and inward in the axial direction of the core in correspondence with the outer surface shape of the core so that the cord applied a tension by the cord holding means is brought into contact with the core outer surface in the meridian direction.

2. The manufacturing device of a pneumatic tire according to claim 1, wherein the moving means moves the both ends of the cord holding means at the same time.

3. The manufacturing device of a pneumatic tire according to claim 1, further comprising means for pressing the both ends of the tire constituting cord onto the core.

4. A method for manufacturing a pneumatic tire, comprising: a process for holding both ends of a tire constituting cord cut to a given length; a process for applying a tension to the cord from the held portion in the longitudinal direction; and a process for arranging the tire constituting cord in the tensioned state from a tread molding portion on a core outer surface having an outer surface shape corresponding to an inner surface shape of a product tire to a direction of a bead molding portion along the meridian.
